# EUROPEAN PATENT SPECIFICATION

(11) **EP 4 316 617 B1**
(45) Date of publication and mention of the grant of the patent: **04.11.2026**
(21) Application number: 23155701.8
(22) Date of filing: 09.02.2023
(51) Int. Cl.: A63F 13/24, A63F 13/98

(54) **GAMEPAD LEVER AND GAMEPAD**
SPIELPADHEBEL UND SPIELPAD
LEVIER DE MANETTE DE JEU ET MANETTE DE JEU

(30) Priority: 02.08.2022 CN 202222027665 U
(43) Date of publication of application: 07.02.2024
(73) Proprietor: Shenzhen Qixiong Technology Co., Ltd, 518000 Shenzhen City Guangdong (CN)
(72) Inventor: Hu, Xiaochen, Shenzhen (CN)
(74) Representative: Osterhoff, Utz

(56) References cited:
- WO-A1-2016/200548
- WO-A1-2017/006292
- CN-B- 106 015 225
- CN-U- 217 773 196
- US-A1- 2020 218 305

## Description

### TECHNICAL FIELD

The present disclosure relates to the technical field of gamepads, in particular to a gamepad lever and a gamepad.

### BACKGROUND

A gamepad is a device used for controlling video games.

With the increase of users' entertainment activities, gamepads are more and more common in the life.

At the same time, when a gamepad is compatible with levers with different heights, the gamepads in the prior art all adopt a direct plugging manner to replace lever accessories to adjust the heights of the levers, so that one lever has to be provided with multiple lever accessories with different heights, that is, multiple lever accessories can satisfy the use of one lever. This will cause high production cost. It is complex for use. It is hard to collect multiple sets of accessories which are easy to lose.

CN106015225B provides a rocking bar with an adjustable length, including a manoeuvre portion, an installation portion, a link rod part connected between manoeuvre portion and installation portion, and a latch-up structure. Link rod part includes threaded rod, and axially disposed groove is provided with threaded rod; Sleeve pipe, screw thread is provided with the madial wall of sleeve pipe; Latch-up structure includes being arranged on the engaging lug of sleeve pipe opposite sides, the locking plate through groove, and connector is respectively equipped between locking plate and the engaging lug of respective side. When needing to adjust link rod part length, connector is pulled down from locking plate, engaging lug, locking plate is extracted out from groove, then slewing maneuver portion, threaded rod are connected with casing threads, and length in threaded rod plug-in-sleeve can be adjusted by rotating manoeuvre portion, so as to realize regulation link rod part length purpose, the rocking bar length for solving the problems, such as handle immobilizes, and length can be adjusted according to the hand size of user, use is very convenient.

Therefore, it is urgent to redesign a new gamepad lever and a gamepad to solve the above problems.

### SUMMARY

The present disclosure provides a gamepad lever and a gamepad, so as to solve the technical problems in the above background section.

The present disclosure provides a gamepad lever. The gamepad lever includes a lever body; a mounting member connectable with a gamepad main body, wherein a first connection thread is formed in the lever body; a second connection thread is formed in the mounting member; the first connection thread and the second connection thread are matched with each other; the lever body rotates on the mounting member to adjust a height of the lever body extending out of the mounting member; a limiting component, wherein the limiting component is mounted between the lever body and the mounting member to limit the lever body and the mounting member; and an assembling component used for improving the assembling convenience of the limiting component, wherein the assembling component is arranged at an end portion of the lever body;
the limiting component includes a limiting screw and a stud used for accommodating the limiting screw; the stud is mounted in the mounting member; one end of the limiting screw is in threaded connection in the stud; and the other end of the limiting screw extends into the lever body;
a mounting cavity that accommodates the limiting screw is formed in the lever body; a clamping bulge for clamping the limiting screw is arranged in the mounting cavity; one end of the limiting screw extends into the stud; and the other end of the limiting screw abuts against an upper edge of the clamping bulge.

Optionally, the lever body includes a hand-cranking portion and a loop bar connected with the hand-cranking portion; one end of the loop bar is connected with the hand-cranking portion; and the other end of the loop bar is connected with the mounting member.

Optionally, the mounting member is provided with an assembling rod in threaded connection with the loop bar, and a storage cavity for storing the loop bar is formed between the assembling rod and the mounting member.

Optionally, a diameter of the loop bar is less than a diameter of the hand-cranking portion.

Optionally, an outer side of the loop bar is circumferentially wrapped with a protective layer.

Optionally, a potentiometer accommodating cavity is formed in the assembling rod; a potentiometer component is stored in the potentiometer accommodating cavity;
the potentiometer component includes a lever potentiometer, a potentiometer rod and a circuit board; one end of the potentiometer rod extends straightly into the potentiometer accommodating cavity; the other end of the potentiometer rod is connected with the lever potentiometer; and one side of the lever potentiometer away from the potentiometer rod is electrically connected with the circuit board.

Optionally, the limiting component is arranged between the lever body and the mounting member.

Optionally, one side of the lever body away from the mounting member is inwards sunken to form a recess; and a top cover is assembled in the recess to seal the recess.

Optionally, the present disclosure further provides a gamepad, including the gamepad lever and a gamepad main body, wherein the gamepad lever is connected with the gamepad main body.

The present disclosure has the beneficial effects below:
The gamepad lever includes a lever body, and a mounting member connected with a gamepad main body, wherein a first connection thread is formed in the lever body; a second connection thread is formed in the mounting member; the first connection thread and the second connection thread are matched with each other; the lever body rotates on the mounting member to adjust a height of the lever body extending out of the mounting member; the first connection thread on the lever body and the second connection thread on the mounting member are matched with each other, so that the lever body can rotate relative to the mounting member. Thus, when the lever body rotates, a distance between the lever body and the mounting member can be freely controlled to satisfy the demand experience of a user for heights of different lever bodies, which avoids the problem that a single lever body needs to be provided with a plurality of accessories, reduces the threshold of use of the user, and also reduces the production cost.

### BRIEF DESCRIPTION OF THE DRAWINGS

In order to describe the technical solutions in the embodiments of the present disclosure more clearly, accompanying drawings required to be used in the descriptions of the embodiments will be briefly introduced below. Obviously, the drawings in the illustration below are merely some embodiments of the present disclosure. Those ordinarily skilled in the art also can acquire other drawings according to the provided drawings without doing creative work.
FIG. 1 is a schematic structural diagram of a first view of a gamepad lever provided by the present disclosure;
FIG. 2 is an exploded view of a gamepad lever provided by the present disclosure;
FIG. 3 is a schematic structural diagram of a first view of a mounting member of a gamepad lever provided by the present disclosure;
FIG. 4 is a schematic structural diagram of a second view of a mounting member of a gamepad lever provided by the present disclosure;
FIG. 5 is a schematic structural diagram of a first view of a lever body of a gamepad lever provided by the present disclosure;
FIG. 6 is a schematic structural diagram of a second view of a lever body of a gamepad lever provided by the present disclosure;
FIG. 7 is a schematic structural diagram of a potentiometer component of a gamepad lever provided by the present disclosure;
FIG. 8 is a schematic structural diagram of a sectional view of a gamepad lever provided by the present disclosure;
FIG. 9 is a partially enlarged diagram of region A in FIG. 8; and
FIG. 10 is a schematic structural diagram of a gamepad main body provided by the present disclosure.

### DETAILED DESCRIPTION OF THE EMBODIMENTS

The technical solutions in the embodiments of the present disclosure will be described clearly and thoroughly below in combination with the accompanying drawings in the embodiments of the present disclosure. It should be understood that the specific embodiments described here are merely to explain the utility model and not intended to limit the utility model. In addition, it should further be noted that for the purpose of facilitating the description, part not all of structures related to the utility model are illustrated only in the accompanying drawings. Based on the embodiments in the present disclosure, all other embodiments obtained by those of ordinary skill in the art without creative work shall fall within the protection scope of the present disclosure.

The "embodiment" mentioned herein means that specific features, structures or characteristics described in combination with the embodiments may be included in at least one embodiment of the present disclosure. This phrase appearing at each position in the description does not refer to the same embodiment, and is not an independent or candidate embodiment mutually exclusive with other embodiments. Those skilled in the art can explicitly and implicitly understand that the embodiments described herein may be combined with other embodiments.

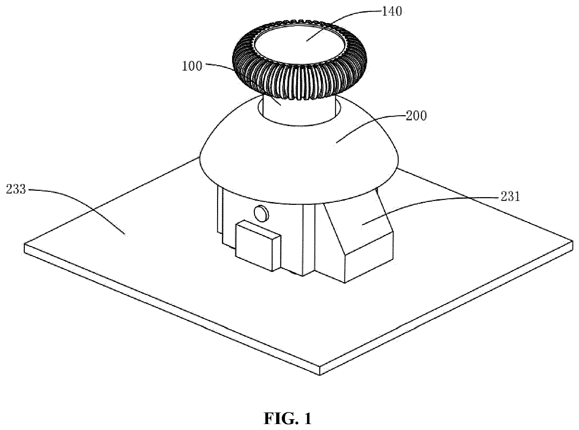

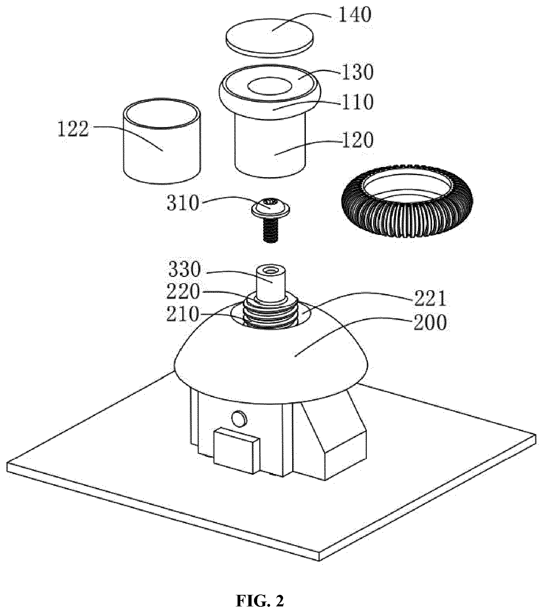

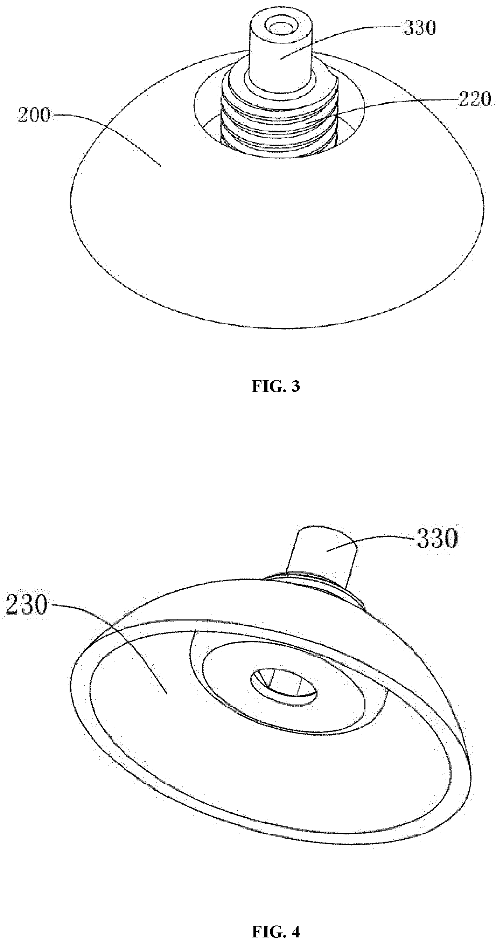

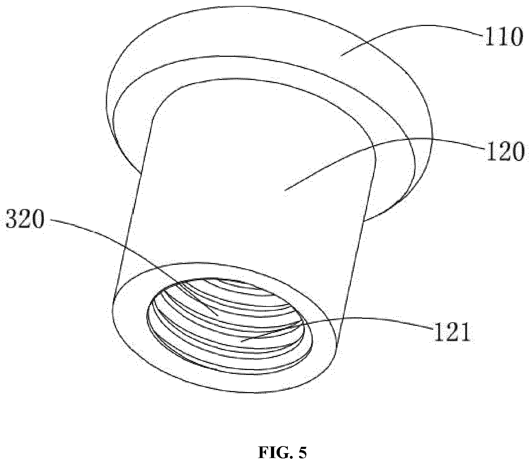

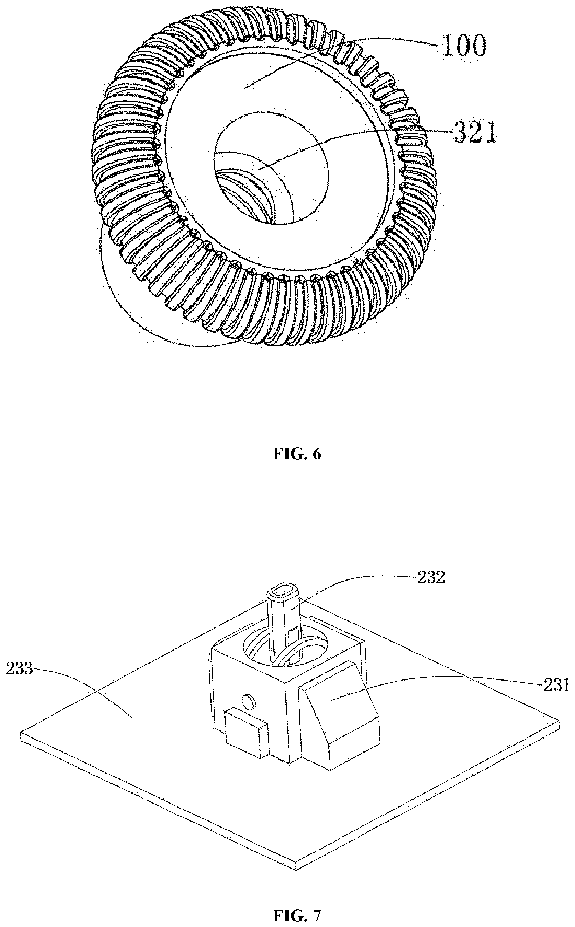

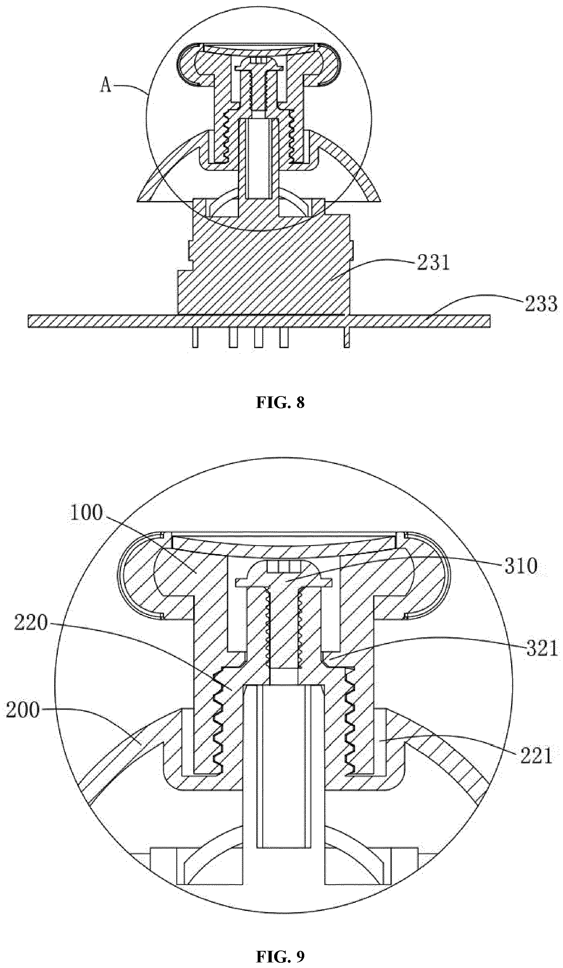

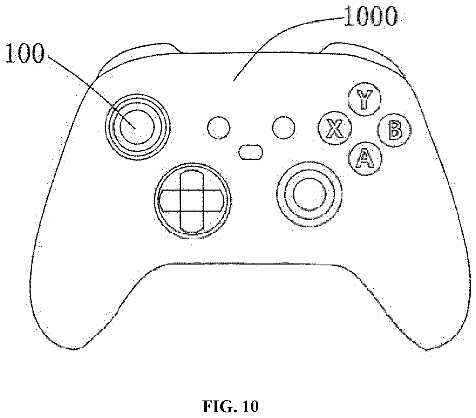

Referring to FIG. 1 to FIG. 10, a gamepad lever of the present disclosure includes a lever body 100, and a mounting member 200 connected with the gamepad main body 1000.

A first connection thread 121 is formed in the lever body 100. A second connection thread 210 is formed in the mounting member 200. The first connection thread 121 and the second connection thread 210 are matched with each other. The lever body 100 rotates on the mounting member 200 to adjust a height of the lever body 100 extending out of the mounting member 200. The gamepad lever further includes a limiting component. The limiting component is mounted between the lever body 100 and the mounting member 200 to limit the lever body 100 and the mounting member 200.

In one embodiment, the first connection thread 121 is an internal thread, and the second connection thread 210 is an external thread, so that the mounting member 200 spirally enters the lever body 100 to control the height of the lever body 100.

In another embodiment, the first connection thread 121 is an external thread, and the second connection thread 210 is an internal thread, so that the lever body 100 spirally enters the lever body 200 to control the height of the lever body 100.

Meanwhile, the limiting component limits the lever body 100 and the mounting member 200, so that the lever body 100 will not be completely separated from the mounting member 200.

Further, by the arrangement of an assembling component, it can be convenient for freely mounting and removing the limiting component in the lever body 100.

In this embodiment, the lever body 100 includes a hand-cranking portion 110 and a loop bar 120 connected with the hand-cranking portion 110. One end of the loop bar 120 is connected with the hand-cranking portion 110. The other end of the loop bar 120 is connected with the mounting member 200.

In one embodiment, the hand-cranking portion 110 and the loop bar 120 are detachably connected to facilitate their assembling. In another embodiment, the hand-cranking portion 110 and the loop bar 120 are integrally molded to improve the stability of rotation of the hand-cranking portion 110.

Specifically, the first connection thread 121 is arranged inside the loop bar 120, and the second connection thread 210 is formed in the mounting member 200, thus connecting the first connection thread 121 with the second connection thread 210 to adjust a height of the loop bar 120 with respect to the mounting member 200.

Furthermore, a diameter of the loop bar 120 is less than that of the hand-cranking portion 110, that is, the diameter of the hand-cranking portion 110 is larger, so as to improve the fitness to the hand of a user and improve the comfort of the user using the hand-cranking portion 110. Meanwhile, a rubber sleeve is arranged on an outer side of the hand-cranking portion 110 to further improve the comfort of the user using the hand-cranking portion 110. The hand-cranking portion 110 and the rubber sleeve can be in injection molding or overmolding.

In this embodiment, the mounting member 200 is provided with an assembling rod 220 in threaded connection with the loop bar 120, and a storage cavity 221 for storing the loop bar 120 is formed between the assembling rod 220 and the mounting member 200.

The loop bar 120 and the assembling rod 220 are in threaded connection, so that when the user controls the hand-cranking portion 110 to rotate, the hand-cranking portion 110 drives the loop bar 120 to rotate relative to the assembling rod 220. Thus, the loop bar 120 vertically moves on the assembling rod 220, and the user can control, by means of rotating the hand-cranking portion 110, the height of the hand-cranking portion 110 when the hand-cranking portion is mounted on the assembling rod 220.

Furthermore, a storage cavity 221 is formed in the mounting member 200. The shape of the storage cavity 221 is matched with the loop bar 120, and a width in the storage cavity 221 is greater than a thickness of the loop bar 120 to improve the storage adaptability of the loop bar 120. Specifically, when the user controls the hand-cranking portion 110 to rotate, the hand-cranking portion 110 drives the loop bar 120 to rotate on the assembling rod 220. In addition, as the loop bar 120 rotates on the assembling rod 220, since the loop bar 120 and the assembling rod 220 are in threaded connection, the loop bar 120 will vertically move relative to the assembling rod 220. When the user rotates the hand-cranking portion 110, the hand-cranking portion 110 will vertically move with the loop bar 120.

Further, when the loop bar 120 drives the hand-cranking portion 110 to move down, an outer edge of the loop bar 120 extends into the storage cavity 221, thus improving the stability of use of the hand-cranking portion 110 by the user.

Meanwhile, an outer side of the loop bar 120 is circumferentially wrapped with a protective layer 122. By the arrangement of the protective layer 122, when the user uses the hand-cranking portion 110, friction between the hand-cranking portion 110 and a gamepad is reduced, thus improving the smoothness of use of the hand-cranking portion 110 by the user. Furthermore, a material of the protective layer 122 can be steel.

In this embodiment, a potentiometer accommodating cavity 230 is formed in the assembling rod 220. A potentiometer component is stored in the potentiometer accommodating cavity 230. The potentiometer component includes a lever potentiometer 231, a potentiometer rod 232 and a circuit board 233. One end of the potentiometer rod 232 extends straightly into the potentiometer accommodating cavity 230. The other end of the potentiometer rod 232 is connected with the lever potentiometer 231. One side of the lever potentiometer 231 away from the potentiometer rod 232 is electrically connected with the circuit board 233.

The potentiometer component is used for identifying a moving trajectory of the lever body 100, so as to transmit an electrical signal of the moving trajectory of the lever body 100 to the gamepad connected outside.

Specifically, the potentiometer rod 232 is accommodated in the potentiometer accommodating cavity 230. A lower end of the potentiometer rod 232 is connected with the lever potentiometer 231. The potentiometer rod 232 moves together with the lever body 100, thus transmitting the moving trajectory to the lever potentiometer 231. The lever potentiometer 231 converts the moving trajectory into a potential signal and transmits same to the circuit board 233.

In this embodiment, the limiting component is arranged between the lever body 100 and the mounting member 200.

The limiting component includes a limiting screw 310 and a stud 330 used for accommodating the limiting screw 310. The stud 330 is mounted in the mounting member 200. One end of the limiting screw 310 is in threaded connection in the stud 330, and the other end of the limiting screw 310 extends into the lever body 100.

The limiting component can limit a rotating height of the lever body 100 relative to the mounting member 200, thus ensuring that the height of the lever body 100 is adjusted within a reasonable range.

Specifically, the stud 330 is mounted at an upper end of the assembling rod 220. A lower end of the limiting screw 310 extends into the stud 330. An upper end of the limiting screw 310 extends into the lever body 100. Thus, the limiting screw 310 can limit the lever body 100 to move within a certain range.

In this embodiment, a mounting cavity 320 that accommodates the limiting screw 310 is formed in the lever body 100. A clamping bulge 321 for clamping the limiting screw 310 is arranged in the mounting cavity 320. One end of the limiting screw 310 extends into the stud 330, and the other end of the limiting screw 310 abuts against an upper edge of the clamping bulge 321.

The end of the limiting screw 310 extending into the lever body 100 is just located on one side of the clamping bulge 321 away from the mounting member 200, so that the clamping bulge 321 limits one end of the limiting screw 310, which ensures that the limiting screw 310 will not be separated from the mounting cavity 320 or the stud 330.

In this embodiment one side of the lever body 100 away from the mounting member 200 is inwards sunken to form a recess 130, and a top cover 140 is assembled in the recess 130 to seal the recess 130.

The recess 130 can communicate with the mounting cavity 320, so that the user mounts the limiting screw 310 in the mounting cavity 320 through the recess 130, and it is convenient to mount and remove the limiting screw 310.

The present disclosure further provides a gamepad, including a gamepad lever and a gamepad main body 1000. The gamepad lever is connected with the gamepad main body 1000.

The gamepad lever includes a lever body 100, a mounting member 200 connected with a gamepad main body 1000. A first connection thread 121 is formed in the lever body 100. A second connection thread 210 is formed in the mounting member 200. The first connection thread 121 and the second connection thread 210 are matched with each other. The lever body 100 rotates on the mounting member 200 to adjust a height of the lever body 100 extending out of the mounting member 200. The gamepad lever further includes a limiting component. The limiting component is mounted between the lever body 100 and the mounting member 200 to limit the lever body 100 and the mounting member 200. The gamepad lever further incudes an assembling component for improving the assembling convenience of the limiting component. The assembling component is arranged at an end portion of the lever body 100. The first connection thread 121 on the lever body 100 and the second connection thread 210 on the mounting member 200 are matched with each other, so that the lever body 100 can rotate relative to the mounting member 200. Thus, when the lever body 100 rotates, a distance between the lever body 100 and the mounting member 200 can be freely controlled to satisfy the demand experience of a user for heights of different lever bodies 100, which avoids the problem that a single lever body 100 needs to be provided with a plurality of accessories, reduces the threshold of use of the user, and also reduces the production cost.

The above descriptions are only the implementations of the present disclosure, and are not intended to limit the patent scope of the present disclosure. The scope of the invention is defined in the appended claims.

## Claims

1. A gamepad lever, connectable with a gamepad main body and comprising a lever body (100), a mounting member (200) connectable with the gamepad main body (1000), a limiting component, and an assembling component used for improving the assembling convenience of the limiting component, wherein
a first connection thread (121) is formed in the lever body (100);
a second connection thread (210) is formed in the mounting member (200); the first connection thread (121) and the second connection thread (210) are matched with each other; the lever body (100) rotates on the mounting member (200) to adjust a height of the lever body (100) extending out of the mounting member (200);
the limiting component is mounted between the lever body (100) and the mounting member (200) to limit the lever body (100) and the mounting member (200);
wherein the limiting component comprises a limiting screw (310) and a stud (330) used for accommodating the limiting screw (310); the stud (330) is mounted in the mounting member (200); one end of the limiting screw (310) is in threaded connection in the stud (330); and the other end of the limiting screw (310) extends into the lever body (100);
**characterised in that**
a mounting cavity (320) that accommodates the limiting screw (310) is formed in the lever body (100); a clamping bulge (321) for clamping the limiting screw (310) is arranged in the mounting cavity (320); one end of the limiting screw (310) extends into the stud (330); and the other end of the limiting screw (310) abuts against an upper edge of the clamping bulge (321).

2. The gamepad lever according to claim 1, wherein the lever body (100) comprises a hand-cranking portion (110) and a loop bar (120) connected with the hand-cranking portion (110); one end of the loop bar (120) is connected with the hand-cranking portion (110); and the other end of the loop bar (120) is connected with the mounting member (200).

3. The gamepad lever according to claim 2, wherein the mounting member (200) is provided with an assembling rod (220) in threaded connection with the loop bar (120), and a storage cavity (221) for storing the loop bar (120) is formed between the assembling rod (220) and the mounting member (200).

4. The gamepad lever according to claim 2, wherein a diameter of the loop bar (120) is less than a diameter of the hand-cranking portion (110).

5. The gamepad lever according to claim 3, wherein an outer side of the loop bar (120) is circumferentially wrapped with a protective layer (122).

6. The gamepad lever according to claim 3, wherein a potentiometer accommodating cavity (230) is formed in the assembling rod (220); a potentiometer component is stored in the potentiometer accommodating cavity (230);
the potentiometer component comprises a lever potentiometer (231), a potentiometer rod (232) and a circuit board (233); one end of the potentiometer rod (232) extends straightly into the potentiometer accommodating cavity (230); the other end of the potentiometer rod (232) is connected with the lever potentiometer (231); and one side of the lever potentiometer (231) away from the potentiometer rod (232) is electrically connected with the circuit board (233).

7. The gamepad lever according to claim 1, wherein one side of the lever body (100) away from the mounting member (200) is inwards sunken to form a recess (130); and a top cover (140) is assembled in the recess (130) to seal the recess (130).

8. A gamepad, comprising the gamepad lever according to any one of claims 1 to 7, and a gamepad main body (1000), wherein the gamepad lever is connected with the gamepad main body (1000).

## Patentansprüche

1. Spielpadhebel, der mit einem Spielpad-Hauptkörper verbindbar ist und einen Hebelkörper (100), ein mit dem Spielpad-Hauptkörper (1000) verbindbares Montageelement (200), eine Begrenzungskomponente und eine Montagekomponente umfasst, die zur Erleichterung der Montage der Begrenzungskomponente dient, wobei ein erstes Verbindungsgewinde (121) in dem Hebelkörper (100) ausgebildet ist,
ein zweites Verbindungsgewinde (210) in dem Montageelement (200) ausgebildet ist,
das erste Verbindungsgewinde (121) und das zweite Verbindungsgewinde (210) passend zueinander ausgebildet sind und sich der Hebelkörper (100) auf dem Montageelement (200) dreht, um die aus dem Montageelement (200) herausragende Höhe des Hebelkörpers (100) einzustellen,
wobei die Begrenzungskomponente zwischen dem Hebelkörper (100) und dem Montageelement (200) montiert ist, um den Hebelkörper (100) und das Montageelement (200) zu begrenzen,
wobei die Begrenzungskomponente eine Begrenzungsschraube (310) und einen zur Aufnahme der Begrenzungsschraube (310) dienenden Bolzen (330) umfasst, der Bolzen (330) in dem Montageelement (200) montiert ist, ein Ende der Begrenzungsschraube (310) mit dem Bolzen (330) in Gewindeverbindung steht und sich das andere Ende der Begrenzungsschraube (310) in den Hebelkörper (100) erstreckt,
**dadurch gekennzeichnet, dass** in dem Hebelkörper (100) ein Montagehohlraum (320), der die Begrenzungsschraube (310) aufnimmt, ausgebildet ist, in dem Montagehohlraum (320) ein Klemmvorsprung (321) zum Festklemmen der Begrenzungsschraube (310) angeordnet ist, sich ein Ende der Begrenzungsschraube (310) in den Bolzen (330) hinein erstreckt und das andere Ende der Begrenzungsschraube (310) an einer Oberkante des Klemmvorsprungs (321) anliegt.

2. Spielpadhebel nach Anspruch 1, wobei der Hebelkörper (100) einen Handbetätigungsabschnitt (110) und eine mit dem Handbetätigungsabschnitt (110) verbundene Hülsenstange (120) umfasst, wobei ein Ende der Hülsenstange (120) mit dem Handbetätigungsabschnitt (110) verbunden ist und das andere Ende der Hülsenstange (120) mit dem Montageelement (200) verbunden ist.

3. Spielpadhebel nach Anspruch 2, wobei das Montageelement (200) mit einer Montagestange (220) versehen ist, die mit der Hülsenstange (120) in Gewindeverbindung steht, und wobei zwischen der Montagestange (220) und dem Montageelement (200) ein Aufnahmehohlraum (221) zur Aufnahme der Hülsenstange (120) ausgebildet ist.

4. Spielpadhebel nach Anspruch 2, wobei ein Durchmesser der Hülsenstange (120) kleiner als ein Durchmesser des Handbetätigungsabschnitts (110) ist.

5. Spielpadhebel nach Anspruch 3, wobei eine Außenseite der Hülsenstange (120) in Umfangsrichtung mit einer Schutzschicht (122) umhüllt ist.

6. Spielpadhebel nach Anspruch 3, wobei in der Montagestange (220) ein Potentiometer-Aufnahmehohlraum (230) ausgebildet ist und eine Potentiometerkomponente in dem Potentiometer-Aufnahmehohlraum (230) aufgenommen ist,
wobei die Potentiometerkomponente ein Hebelpotentiometer (231), eine Potentiometerstange (232) und eine Leiterplatte (233) umfasst, sich ein Ende der Potentiometerstange (232) geradlinig in den Potentiometer-Aufnahmehohlraum (230) erstreckt, das andere Ende der Potentiometerstange (232) mit dem Hebelpotentiometer (231) verbunden ist und eine von der Potentiometerstange (232) abgewandte Seite des Hebelpotentiometers (231) elektrisch mit der Leiterplatte (233) verbunden ist.

7. Spielpadhebel nach Anspruch 1, wobei eine von dem Montageelement (200) abgewandte Seite des Hebelkörpers (100) nach innen zur Ausbildung einer Ausnehmung (130) vertieft ist und eine obere Abdeckung (140) in der Ausnehmung (130) montiert ist, um die Ausnehmung (130) zu verschließen.

8. Spielpad, umfassend den Spielpadhebel nach einem der Ansprüche 1 bis 7 und einen Spielpad-Hauptkörper (1000), wobei der Spielpadhebel mit dem Spielpad-Hauptkörper (1000) verbunden ist.

## Revendications

1. Levier de manette de jeu, permettant d'être connecté à un corps principal de manette de jeu et comprenant un corps de levier (100), un élément de montage (200) permettant d'être connecté au corps principal de manette de jeu (1000), un composant de limitation, et un composant d'assemblage destiné à faciliter l'assemblage du composant de limitation, dans lequel
un premier filetage de connexion (121) est formé dans le corps de levier (100) ;
un second filetage de connexion (210) est formé dans l'élément de montage (200) ; le premier filetage de connexion (121) et le second filetage de connexion (210) correspondent l'un à l'autre ; le corps de levier (100) tourne sur l'élément de montage (200) pour ajuster une hauteur du corps de levier (100) dépassant de l'élément de montage (200) ;
le composant de limitation est monté entre le corps de levier (100) et l'élément de montage (200) pour limiter un mouvement du corps de levier (100) et de l'élément de montage (200) ;
dans lequel le composant de limitation comprend une vis de limitation (310) et un boulon (330) destiné à accueillir la vis de limitation (310) ; le boulon (330) est monté dans l'élément de montage (200) ; une extrémité de la vis de limitation (310) est en connexion par filetage dans le boulon (330) ; et l'autre extrémité de la vis de limitation (310) s'étend jusqu'à l'intérieur du corps de levier (100) ;
**caractérisé en ce qu'**une cavité de montage (320) qui accueille la vis de limitation (310) est formée dans le corps de levier (100) ; une saillie de serrage (321) pour serrer la vis de limitation (310) est agencée dans la cavité de montage (320) ; une extrémité de la vis de limitation (310) s'étend jusqu'à l'intérieur du boulon (330) ; et l'autre extrémité de la vis de limitation (310) s'appuie contre un bord supérieur de la saillie de serrage (321).

2. Levier de manette de jeu selon la revendication 1, dans lequel le corps de levier (100) comprend une portion de manivelle manuelle (110) et une barre en boucle (120) connectée à la portion de manivelle manuelle (110) ; une extrémité de la barre en boucle (120) est connectée à la portion de manivelle manuelle (110) ; et l'autre extrémité de la barre en boucle (120) est connectée à l'élément de montage (200).

3. Levier de manette de jeu selon la revendication 2, dans lequel l'élément de montage (200) est pourvu d'une tige d'assemblage (220) en connexion par filetage avec la barre en boucle (120), et une cavité de stockage (221) pour stocker la barre en boucle (120) est formée entre la tige d'assemblage (220) et l'élément de montage (200).

4. Levier de manette de jeu selon la revendication 2, dans lequel un diamètre de la barre en boucle (120) est inférieur à un diamètre de la portion de manivelle manuelle (110).

5. Levier de manette de jeu selon la revendication 3, dans lequel un côté extérieur de la barre en boucle (120) est entouré de manière circonférentielle d'une couche protectrice (122).

6. Levier de manette de jeu selon la revendication 3, dans lequel une cavité d'accueil de potentiomètre (230) est formée dans la tige de montage (220) ; un composant potentiomètre est stocké dans la cavité d'accueil de potentiomètre (230) ;
le composant potentiomètre comprend un potentiomètre de levier (231), une tige de potentiomètre (232) et une carte de circuit imprimé (233) ; une extrémité de la tige de potentiomètre (232) s'étend directement jusqu'à l'intérieur de la cavité d'accueil de potentiomètre (230) ; l'autre extrémité de la tige de potentiomètre (232) est connectée au potentiomètre de levier (231) ; et un côté du potentiomètre de levier (231) éloigné de la tige de potentiomètre (232) est connecté électriquement à la carte de circuit imprimé (233).

7. Levier de manette de jeu selon la revendication 1, dans lequel un côté du corps de levier (100) éloigné de l'élément de montage (200) se creuse pour former un creux (130) ; et un couvercle supérieur (140) est assemblé dans le creux (130) pour étancher le creux (130).

8. Manette de jeu, comprenant le levier de manette de jeu selon l'une quelconque des revendications 1 à 7, et un corps principal de manette de jeu (1000), dans lequel le levier de manette de jeu est connecté au corps principal de manette de jeu (1000).
